# EUROPÄISCHE PATENTSCHRIFT

(11) **EP 2 874 767 B1**
(45) Veröffentlichungstag und Bekanntmachung des Hinweises auf die Patenterteilung: **24.08.2016**
(21) Anmeldenummer: 13739426.8
(22) Anmeldetag: 19.07.2013
(51) Int. Cl.: B22D 11/128, B21B 27/00, B21B 27/08, B21B 39/00, C03B 35/18, F27D 3/02

(54) **FÜHRUNGSROLLE FÜR DIE STRANGFÜHRUNG BEI EINER STRANGGIESSANLAGE, SOWIE EINE ROLLENANORDNUNG**
ROLL ARRANGEMENT FOR A CONTINUOUS CASTING APPARATUS
AGENCEMENT DE ROULEAU POUR UNE INSTALLATION DE COULÉE CONTINUE

(30) Priorität: 20.07.2012 EP 12005307
(43) Veröffentlichungstag der Anmeldung: 27.05.2015
(73) Patentinhaber: SMS Concast AG, 8027 Zürich (CH)
(72) Erfinder: DRATVA, Christian, CH-8052 Zürich (CH)
(74) Vertreter: Luchs, Willi
(86) Internationale Anmeldenummer: PCT/EP2013/065276
(87) Internationale Veröffentlichungsnummer: WO 2014/013050

(56) Entgegenhaltungen:
- EP-A1- 1 136 156
- WO-A1-2005/016578
- WO-A1-2011/026957

## Beschreibung

Die Erfindung betrifft eine Führungsrolle für die Strangführung bei einer Stranggiessanlage nach dem Oberbegriff des Anspruchs 1. Die Erfindung betrifft ferner eine Rollenanordnung nach dem Oberbegriff des Anspruchs 8.

Aus dem Stand der Technik sind Stranggiessanlagen zur diskontinuierlichen oder kontinuierlichen Herstellung von Knüppeln, Brammen oder ähnlichem bekannt.

Um den Metallstrang nach dem Verlassen der Kokille zu führen und zu kühlen werden in den bekannten Stranggiessanlagen drehbar gelagerte Führungsrollen verwendet. Diese Führungsrollen sind innen- oder aussenseitig wassergekühlt. Um die Stützfunktion zu gewährleisten, müssen die Achsabstände dieser Rollen gemäss dem Schrumpfungsverhalten des Giessstrangs präzise eingestellt werden, was sehr zeitaufwändig ist und zu Qualitäts- bzw. Produktionsverlusten führen kann, wenn diese Abstände ungenügend eingestellt sind.

Gattungsgemässe Führungsrollen einer Rollenanordnung für eine Stranggiessanlage ist aus der JP 63072457-A bekannt. Diese Rollenanordnung umfasst eine Mehrzahl von Führungsrollen, welche längs des von der Stranggiessanlage erzeugten Strangs jeweils in einem axialen Abstand zueinander angeordnet sind. In der Rollenanordnung der JP-A-63072457 sind drei Reihen verschiedener Führungsrollen vorgesehen, wobei eine erste Reihe von Führungsrollen nachfolgend zum Ausgang der Kokille angeordnet ist und mehrere in Längsrichtung des erzeugten Strangs im Abstand zueinander angeordnete Rollen mit einem ersten Durchmesser umfasst. Danach schliesst sich in Strangrichtung eine zweite Reihe von Führungsrollen an, welche eine Mehrzahl von Führungsrollen umfasst, die einen kleineren Durchmesser als die Führungsrollen der ersten Reihe aufweisen. Diese zweite Reihe von Führungsrollen dient der Umlenkung des erzeugten Strangs. An die zweite Reihe schliesst sich eine Dritte Reihe von Führungsrollen an, welche eine Mehrzahl von Führungsrollen aufweist, die gegenüber der zweiten Reihe einen grösseren Durchmesser aufweisen.

In der Druckschrift WO-A-2011/026957 ist eine mit einem Kühlmedium versorgbare zapfenlose Rolle für eine Stranggiessanlage geoffenbart. Diese ist mit einem rotationssymmetrischen Rollenmantel zur Aufnahme von Kühlmedium und mit mindestens einem Rolleneinsatzstück versehen, an dem eine Aufnahme für ein auf einem Lagerbockzapfen getragenes Rollenlager ausgebildet ist. Das Rolleneinsatzstück ist dabei jeweils innerhalb des Rollenmantels angeordnet und daran druckdicht festgelegt, wobei zwischen diesen Rolleneinsatzstücken und dem Rollenmantel ein Hohlraum zur Aufnahme des Kühlmediums gebildet ist. Damit ist aber eine relativ aufwendige Konstruktion für die Kühlmittelführung ausgehend von den Lagerböcken gegeben.

Eine innengekühlte Strangführungsrolle gemäss der Druckschrift WO-A-2005/016578 ist mit einer zentralen drehbaren Welle und mindestens einem darauf verdrehgesichert abgestützten Rollenmantel versehen. Dieser Rollenmantel ist von Kühlmittelkanälen durchsetzt, welche in einem konstantem Abstand von der zylindrischen Rollenmantel-Außenfläche des Rollenmantels im Rollenmantel angeordnet sind. Die Kühlmittelkanäle im Rollenmantel sind dabei parallel zur Drehachse der Rolle oder wendelförmig darin ausgerichtet. Nachteilig ist die massive Ausbildung der zentralen Welle sowie diese anfälligen Dichtungen zwischen der Welle und Wasserleitringen aussenseitig beim Rollenmantel, welche wegen dem rauen Betrieb schnell die Dichtigkeit verlieren können.

Bei einem bekannten Strangführungssegment gemäss der Druckschrift EP-A-1 136 156 sind die Stützrollen senkrecht zur Führungsebene des Stranges federelastisch abgestützt. Dies erfolgt durch die Führung aus einer Vielzahl von über die Länge der Traverse verteilten, vom Träger getragenen Buchsen und von diesen getragenen, in Kraftrichtung der federelastischen Abstützung wirkenden Anschlägen für die Traverse. Die federelastische Abstützung kann dabei aus Ring- oder Tellerfedern bestehen, mittels denen aber nur ein beschränkter Federweg möglich ist. Zudem besteht die Gefahr, dass diese Buchsen bzw. Federn bei den rauen Bedingungen mit den hohen Abstrahltemperaturen des Strangs und dem teils aggressiven Kühlwasser nach einer kurzen Betriebszeit bereits klemmen und nicht mehr funktionstüchtig sind.

Mit zunehmender Betriebsdauer einer Stranggiessanlage wird der Strangquerschnitt aufgrund einer Abnutzung der Kokille grösser. Daraus entsteht das Problem, dass die bezüglich der Kokille fest angeordneten Führungsrollen nicht über die gesamte Einsatzdauer mit derselben Anpresskraft an der Oberfläche des erzeugten Strangs anliegen. Dies kann zu einer verminderten Qualität des erzeugten Strangprofils und/oder zu erhöhter Durchbruchhäufigkeit führen. Zudem müssen die Rollen aufgrund ihrer Abnützung durch den Strang wieder nachgestellt werden, was ebenfalls arbeits- bzw. zeitaufwändig ist.

Hiervon ausgehend liegt der Erfindung die Aufgabe zugrunde, eine Führungsrolle für die Strangführung bei einer Stranggiessanlage zu schaffen, bei der die Führungsrollen mit einem kleinen Durchmesser versehen werden können und trotzdem während dem Giessen mit bleibender Steifigkeit arbeiten.

Diese Aufgabe ist mit einer Führungsrolle gemäss den Merkmalen des Anspruchs 1 bzw. einer Rollenanordnung gemäss den Merkmalen des Anspruchs 8 gelöst.

Die erfindungsgemässe Führungsrolle weist beidseitig einen Lagerzapfen auf, der über ein Gleitlager oder ein Wälzlager drehbar in einem Lagerbock gelagert ist. Dabei sind die beiden Lagerzapfen jeweils als Hohlzapfen ausgebildet und mit der Kühlmittelversorgungsleitung verbindbar, wobei das Gleitlager durch das durch den als Hohlzapfen ausgebildeten Lagerzapfen geleitete Kühlmittel geschmiert wird.

Damit können die Rollendurchmesser sehr klein gebaut werden und demzufolge kann auch eine Minimierung der Abstände der Führungsrollen zueinander erfolgen. Mit dieser Ausbildung der Führungsrollen können dünnere Strangschalen zum Beispiel bei schnellerem Giessen besser geführt werden.

Das durch den als Hohlzapfen ausgebildeten Lagerzapfen geleitete Kühlmittel kann in dieser Ausführungsform gleichzeitig als Schmier- und Kühlmittel für das Gleitlager dienen.

Um diese möglichst effiziente Kühlung der Führungsrollen zu ermöglichen, weisen die erfindungsgemässen Führungsrollen einen zylindrischen Rollenkern auf, um den ein Rollenmantel angeordnet ist. Der Rollenkern weist an seinem Aussenumfang einen im Wesentlichen helixförmigen Kühlmittelkanal auf. Dieser helixförmige Kühlmittelkanal ist mit einer Kühlmittelversorgungsleitung zur Durchleitung eines Kühlmittels verbindbar. Die helixförmige Ausbildung des Kühlmittelkanals stellt eine gleichmässige Kühlung der Führungsrolle über die gesamte Rollenbreite sicher. Mit dieser verhältnismässig intensiven Kühlung in den dünnen Rollen ist sichergestellt, dass diese Rollen formstabil bleiben und sich nicht durch thermische Spannungen verbiegen.

Damit ist gewährleistet, dass die Führungsrollen zu jeder Zeit mit einem optimalen Anpressdruck an der Oberfläche des erzeugen Strangs anliegen bzw. eine möglichst effiziente Kühlung der Führungsrolle über ihre gesamte Führungsfläche erfolgt. Dabei soll der aus der Kokille austretende Strang gestützt und geführt, aber nicht durch unnötige Kräfte belastet werden, dies zum Beispiel durch nicht korrekt eingestellte Rollenpositionen.

Die erfindungsgemässe Rollenanordnung für eine Stranggiessanlage umfasst eine Mehrzahl von Führungsrollen, welche längs des von der Stranggiessanlage erzeugten Strangs in einem Abstand zueinander angeordnet und jeweils drehbar in mindestens einem Lagerbock gelagert sind. Die Lagerböcke sind dabei jeweils federelastisch an einem Rahmen bzw. einem Rahmenteil gelagert. Das Rahmenteil ist zweckmässig Bestandteil der Anlage oder eines fest mit der Kokille verbundenen Rahmens.

Durch die federelastische Lagerung der Lagerböcke werden die in den Lagerböcken drehbar gelagerten Führungsrollen selbsteinstellend an die Oberfläche des erzeugten Strangs gedrückt. Auch bei sich während der Betriebsdauer oder infolge der geänderten Prozessparametern der Stranggiessanlage veränderndem Strangquerschnitt des erzeugten Strangs bleibt der ursprünglich eingestellte Anpresskraft der Führungsrollen im Wesentlichen unverändert, weil sich die Lage der Führungsrollen aufgrund der federelastischen Lagerung der Lagerböcke an den Strangquerschnitt anpassen kann.

Durch fehlenden Kontakt der Rollen an der Strangoberfläche oder aufgrund blockierender Rollen wegen Überhitzung der Lagerung können Oberflächenfehler am Strang in Form von Längskratzern oder ähnlichem entstehen.

Auch der Zusammenbau dieser erfindungsgemässen Rollenanordnung lässt sich sehr einfach bewerkstelligen, da die Rollen nicht in Bezug auf den Strangquerschnitt sehr genau voreingestellt werden müssen.

Zweckmässig sind die Lagerböcke durch federelastische Verbindungsmittel an dem Rahmen bzw. den Rahmenteilen federelastisch gelagert. Bei den federelastischen Verbindungsmitteln kann es sich beispielsweise um Bügel, Bänder, Teller- oder Blattfedern aus Federstahl handeln. Die federelastischen Verbindungsmittel können auch durch Druckfedern, insbesondere Gasdruckfedern, oder durch Torsionsfedern gebildet werden.

Bevorzugt weisen die federelastischen Verbindungsmittel eine lineare Federkennlinie auf, um eine möglichst gute Anpassung der Lage der Führungsrollen in Bezug auf den erzeugten Strang und dadurch einen gleichbleibenden Anpressdruck zu gewährleisten. Durch eine geeignete Auswahl bzw. Anpassung der federelastischen Verbindungsmittel kann der Anpressdruck, mit dem die Führungsrollen an die Oberfläche des Strangs gedrückt werden, zunächst auf einen optimalen Wert eingestellt werden. Der zunächst eingestellte Anpressdruck bleibt dann auch im weiteren Verlauf der Betriebsdauer der Stranggiessanlage aufgrund der federelastischen Lagerung der Lagerböcke im Wesentlichen unverändert, da sich die Lage der Führungsrollen an den Querschnitt des erzeugten Strangs anpasst, wenn sich dieser, bspw. durch Verschleiß der Kokille oder infolge der geänderten Prozessparameter, mit zunehmender Betriebsdauer der Stranggiessanlage ändern sollte.

Um eine möglichst einfache und optimale Anpassung des Anpressdrucks bzw. der Anpresskraft zu ermöglichen, sind die federelastischen Verbindungsmittel, über welche die Lagerböcke an den Rahmenteilen gelagert sind, durch Gasdruckfedern gebildet, deren Federdruck auf einfache Art eingestellt und angepasst werden kann. Als besonders zweckmässig hat sich die Einstellung einer Anpresskraft je nach Position der jeweiligen Führungsrolle und Giessformat zwischen 100 N und 1200 N erwiesen.

Die Führungsrollen können je nach Anforderung beispielsweise an zwei gegenüberliegenden Seiten des erzeugten Strangs oder auch so angeordnet sein, dass sie den Strang an allen Seiten umgeben. Auch eine Anordnung der Führungsrollen nur an der Strangunterseite ist möglich. Entsprechende Anordnungen der Führungsrollen in Form von Rollenkränzen, Doppelrollen oder einfache Rollen sind aus dem Stand der Technik bekannt.

Um den erzeugten Strang möglichst in geringen Abständen der Rollen zu stützen und einwandfrei zu führen, werden in der Rollenanordnung zweckmässig Führungsrollen mit einem kleineren Durchmesser verwendet, verglichen mit den aus dem Stand der Technik bekannten Führungsrollen. Diese Führungsrollen mit kleinem Durchmesser werden in einem möglichst kleinen Achsabstand (pitch) zueinander in Längsrichtung des erzeugten Strangs hintereinander liegend angeordnet. Solche geringe Rollenabstände vermindern die Ausbauchung der Strangschale infolge des ferrostatischen Innendruckes im Strang, was zu erhöhter Betriebssicherheit und Qualitätsverbesserung im Stranginnern führt.

Ausführungsbeispiele sowie weitere Vorteile der Erfindung sind nachfolgendend anhand der begleitenden Zeichnungen erläutert. Die Zeichnungen zeigen:
- Fig. 1: Perspektivische Darstellung einer erfindungsgemässen Rollenanordnung für eine Stranggiessanlage;
- Fig. 2: Längsschnitt durch die Rollenanordnung von Fig. 1;
- Fig. 3: Querschnitt durch die Rollenanordnung von Fig. 2, entlang der Linie B-B;
- Fig. 4: perspektivische Darstellung mehrerer Führungsrollen der Rollenanordnung von Fig. 1;
- Fig. 5: perspektivische Darstellung der federelastischen Verbindungsmittel, die zur Befestigung der Führungsrollen nach Fig. 4 an einem Rahmen dienen;
- Fig.6: Darstellung einer erfindungsgemässen Führungsrolle in einer perspektivischen Ansicht (Fig. 6A,) einer teilweise im Aufriss dargestellten Ansicht (Fig. 6b) und einer Querschnittsdarstellung (Fig. 6c);
- Fig. 7: Schnitt einer weiteren Ausführungsform einer erfindungsgemässen Führungsrolle;
- Fig. 8: Schnitt einer weiteren Ausführungsform einer erfindungsgemässen Führungsrolle; und
- Fig. 9: Schnitt einer weiteren Ausführungsform einer erfindungsgemässen Führungsrolle.

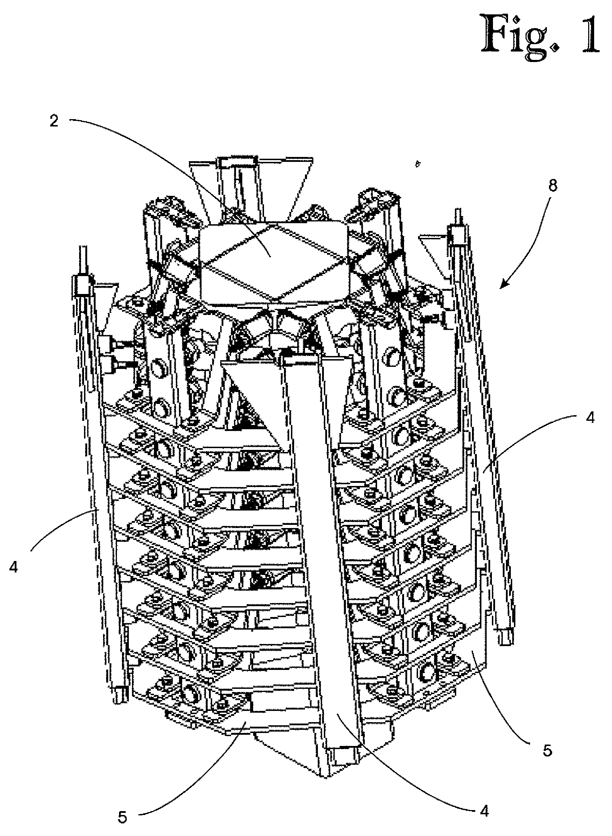

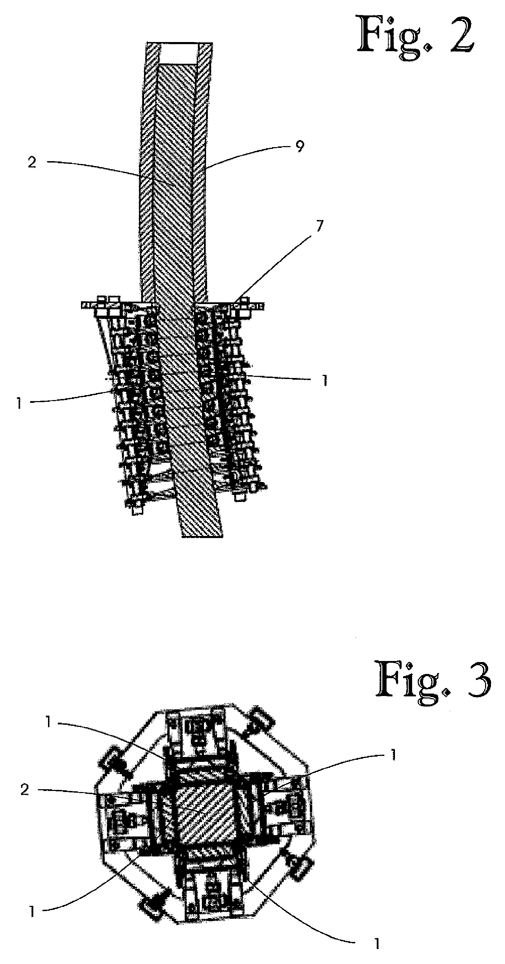

Die in Fig. 1 und Fig. 2 gezeigte Rollenanordnung für eine Stranggiessanlage umfasst einen Rahmen 8, welcher vorzugsweise fest mit einer Kokille 9 der Stranggiessanlage verbunden ist. Dabei oszilliert der Rahmen 8 mit der Oszillation der Kokille 9 mit oder er ist wie ein Führungssegment fest entlang der Giesslänge befestigt. In der Kokille 9 ist der erzeugte Strang 2 insbesondere aus Stahl geführt. Der aus der Kokille 9 austretende Strang muss daher mittels einer Rollenanordnung gestützt und geführt werden. Um gleichzeitig eine Kühlung des Strangs 2 zu ermöglichen, umfasst die Rollenanordnung gekühlte Führungsrollen 1.

Wie sich insbesondere aus der Querschnittsdarstellung der Fig. 3 ergibt, sind die Führungsrollen 1 bei dem hier gezeigten Ausführungsbeispiel an allen vier Seiten des im Querschnitt rechteckigen Strangs 2 angeordnet. Andere Anordnungen, wie Sie aus dem Stand der Technik bekannt sind, sind jedoch mit der erfindungsgemässen Rollenanordnung möglich.

Wie sich aus Fig. 2 ergibt, sind in Längsrichtung des Strangs 2 an jeder Seite mehrere Führungsrollen 1 hintereinander und in einem axialen Abstand zueinander angeordnet. Der Achsabstand von benachbarten Führungsrollen 1 beträgt dabei zweckmässig mindestens 50 mm und höchstens 200 mm, dies vorzugsweise in den ersten 2 bis 3 Metern nach der Kokille. Bevorzugt werden axiale Abstände von weniger als 100 mm gewählt. Als besonders geeignet haben sich axiale Abstände von axial benachbarten Führungsrollen von beispielsweise 70 mm erwiesen, bei einem Durchmesser der Führungsrollen von 45 mm.

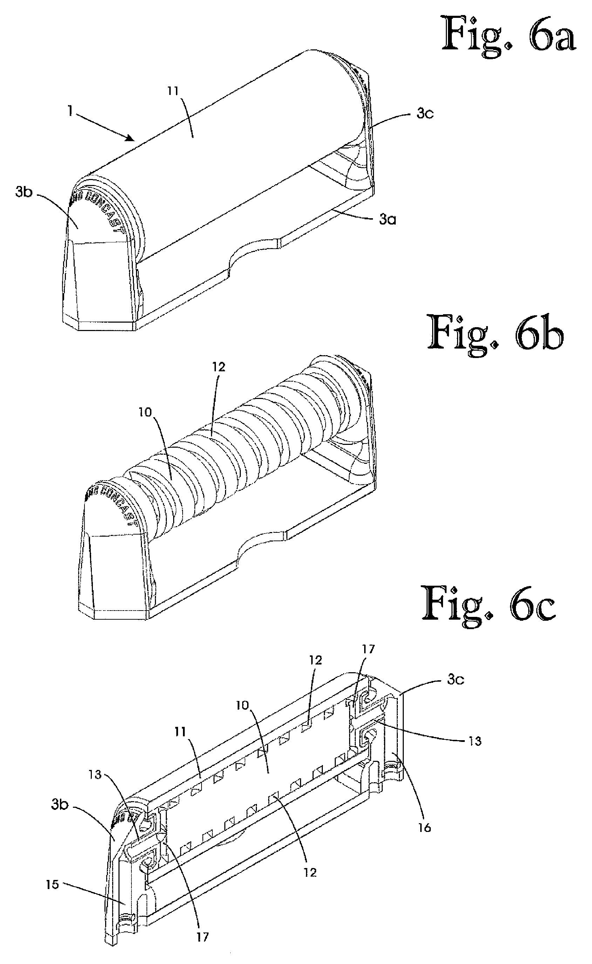

Die Führungsrollen 1 sind jeweils einzeln drehbar in einem Lagerbock 3 gelagert. Jeder Lagerbock 3 umfasst dabei eine als Platte ausgebildete Sockelplatte 3a und zwei senkrecht darauf angeordnete Böcke 3b, 3c (Fig. 6). Die Sockelplatte 3a ist über federelastische Verbindungsmittel 6 an dem Rahmen 8 federelastisch gelagert.

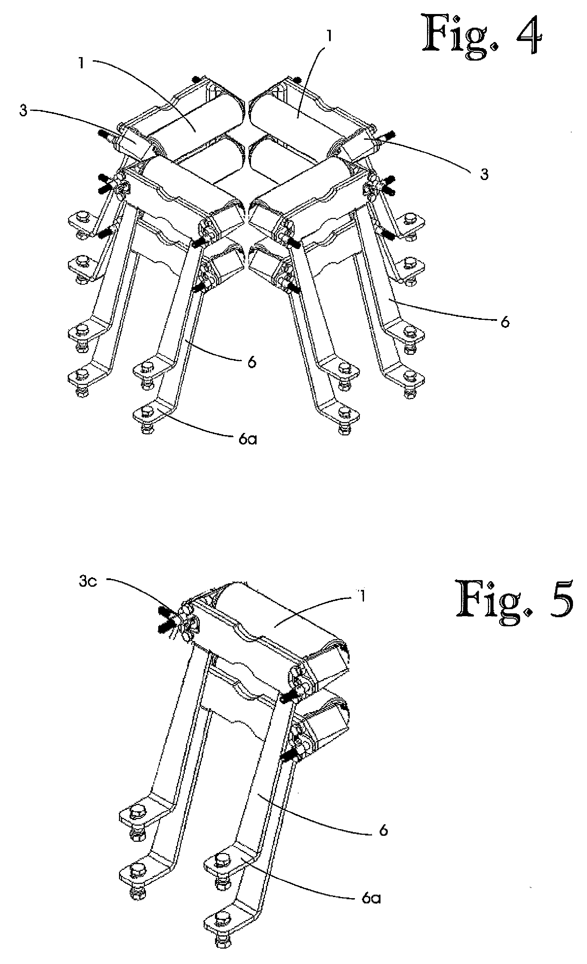

Gemäss Fig. 4 bzw. Fig. 5 sind die federelastischen Verbindungsmittel 6 durch Bügel aus Federstahl gebildet, wobei für jede Sockelplatte 3c zwei solcher Bügel bzw. Bänder aus Federstahl vorgesehen sind. Über diese federelastischen Verbindungsmittel 6 ist jeder Lagerbock 3 federelastisch an dem Rahmen 8 gelagert.

Bei dem in Fig. 1 bis Fig. 3 gezeigten Ausführungsbeispiel umfasst der Rahmen 8 vertikale Rahmenteile 4 und daran befestigte horizontale Rahmenteile 5. Die vertikalen Rahmenteile 4 erstrecken sich um den Strang 2 in Längsrichtung des Strangs und sind vorzugsweise an einem an der Kokille 9 befestigten Flansch 7 befestigt. Zwischen den vertikalen Rahmenteilen 4 erstrecken sich im Abstand zueinander und parallel übereinander angeordnete horizontale Rahmenteile 5, an denen die Fussteile 6a der federelastischen Verbindungsmittel 6 befestigt sind, insbesondere angeschraubt.

Mit dieser Rollenanordnung ergibt sich ein weiterer Vorteil, nämlich dass diese federelastischen Bügel in einem geringen Abstand übereinander angeordnet werden können und dadurch diese geringen Abstände der Führungsrollen zueinander ermöglicht wird.

Durch die gezeigte Anordnung werden die Führungsrollen 1 aufgrund der federelastischen Lagerung der Lagerböcke 3 an die Oberfläche des Strangs 2 mit einer vorgegebenen und einstellbaren Anpresskraft gedrückt. Die Anpresskraft bzw. der Anpressdruck kann dabei durch geeignete Auswahl bzw. Anpassung der federelastischen Verbindungsmittel 6 auf einen gewünschten Wert eingestellt werden. Handelt es sich bei den federelastischen Verbindungsmitteln 6 beispielsweise um Bügel aus Federstahl, kann der Anpressdruck durch die Dicke der Bügel variiert werden. Zweckmässig sind die federelastischen Verbindungsmittel 6 durch Druckfedern gebildet. Mit solchen Druckfedern kann ein gewünschter Federdruck und damit eine gewünschte Anpresskraft der Führungsrollen 1 an der Oberfläche des Strangs 2 eingestellt werden. Zweckmässig wird eine Anpresskraft je nach Position und Giessformat zwischen 100 N und 1200 N gewählt.

Beim Giessstart der Stranggiessanlage wird zunächst ein Anfahrstrang (Kaltstrang) in die Kokille 9 eingeführt, der den Kokillenausgang zunächst verschliesst. Das danach in die Kokille 9 eingefüllte schmelzflüssige Metall erstarrt dann auf dem Anfahrkopf und wird mit diesem aus der Kokille 9 herausgezogen. Dabei werden die unter der Federkraft der federelastischen Verbindungsmittel 6 vorgespannten Führungsrollen 1 (radial) nach aussen, d.h. vom Anfahrkopf weg, gedrückt und liegen dann unter der Vorspannung der Verbindungsmittel 6 mit einer vorgegebenen Anpresskraft an der Oberfläche des Strangs 2 an.

In Fig. 6 ist ein erstes Ausführungsbeispiel einer erfindungsgemässen Führungsrolle gezeigt. Diese Führungsrolle ist drehbar in einem Lagerbock 3 gelagert, wobei der Lagerbock 3 eine plattenförmige Sockelplatte 3a und zwei senkrecht darauf angeordnete Böcke 3b, 3c aufweist. Die Führungsrolle 1 ist beidseitig in den Böcken 3b, 3c des Lagerbocks 3 drehbar gelagert und sie umfasst einen zylindrischen Rollenkern 10 sowie einen um den Rollenkern 10 angeordneten Rollenmantel 11, der zylinderförmig ausgebildet ist (Fig. 6b und Fig. 6c). Am Aussenumfang weist der zylindrische Rollenkern 10 einen im Wesentlichen helixförmigen Kühlmittelkanal 12 auf, welcher durch eine helixförmige Nut im Aussenumfang des Rollenkerns 10 gebildet und aussenseitig durch die Innenumfangsfläche des Rollenmantels 11 begrenzt ist. Bei dem Rollenmantel 11 handelt es sich bevorzugt um ein Schrumpfteil aus Metall, welches durch Hitze auf den Rollenkern 11 aufgeschrumpft wird.

Gemäss Fig. 6c umfasst die Führungsrolle 1 jeweils an ihren beiden Stirnseiten einen Lagerzapfen 13, der als Hohlzapfen mit einer Durchgangsbohrung ausgebildet ist. Die beiden Lagerzapfen 13 der Führungsrolle 1 mit jeweils einem diesen umgebenden Gleitlager 14 ist in den Böcken 3b, 3c des Lagerbocks 3 gelagert. In den Böcken 3c, 3b des Lagerbocks 3 sind ein Zufuhrkanal 15 bzw. ein Abfuhrkanal 16 für ein Kühlmittel vorgesehen. Die Kanäle 15 und 16 werden mit einem Kühlmittelkreislauf verbunden und stehen zur Durchleitung eines Kühlmittels durch die Führungsrolle 1 mit der Durchgangsbohrung der als Hohlzapfen ausgebildeten Lagerzapfen 13 in Verbindung.

Im Inneren des Rollenkerns 10 sind radiale Verbindungskanäle 17 vorgesehen, über welche der helixförmige Kühlmittelkanal 12 mit der Bohrung in den Lagerzapfen 13 in Verbindung steht. Durch diese Anordnung wird eine Kühlmittelleitung gebildet, über die ein Kühlmittel durch die Führungsrolle 1 geführt werden kann. Aufgrund der helixförmigen Ausbildung des helixförmigen Kühlmittelkanals 12 im Rollenkern 10 wird gewährleistet, dass über die gesamte Breite der Führungsrolle 1 eine gleichmässige Kühlung insbesondere des Rollenmantels 11 erfolgt.

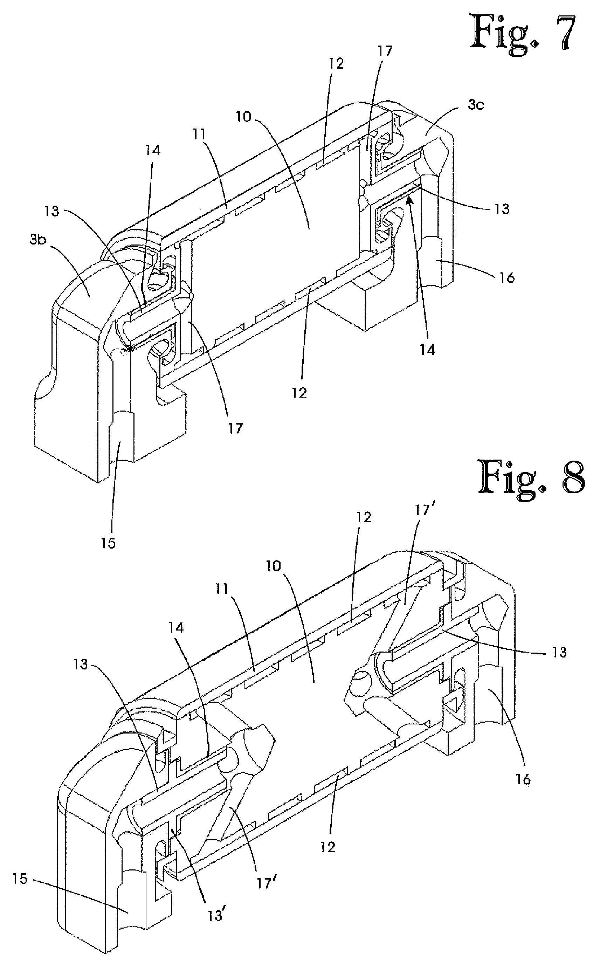

Bei der Variante nach Fig. 7 ist der jeweilige Lagerzapfen 13 als Bestandteil des Rollenkerns 10 ausgebildet und ragt in den Lagerbock 3, in dem er von einem äusseren Gleitlager 14 umgeben ist. Der Kanal 15 im Lagerbock 3 darin ist dabei derart dimensioniert, dass er das äussere Gleitlager 14 stirnseitig umgibt, so dass das Kühlmittel zwischen Gleitlager 14 und dem Lagerbock 3 einfliessen kann. Dieses einströmende Kühlmittel, bei dem es sich vorzugsweise um Wasser handelt, trägt dadurch zur Schmierung des Gleitlagers 14 bei. Die Schmierwirkung wird dabei mit zunehmender Betriebsdauer der Stranggiessanlage erhöht, weil das Lagerspiel größer wird und dadurch mehr Kühlmittelflüssigkeit in das Lager 14 eindringen kann. Bei der Schmierung der Gleitlager mit Wasser als Kühlmittel ergibt sich im Gegensatz zur konventionellen Lagerschmierung keine Kontamination des Wasserkühlkreislaufes mit öibasierten Schmiermitteln. Zusätzlich ermöglicht die federelastische Anstellung die Kompensation des Verschleisse des Gleitlagerbüchsen.

Bei der Führungsrolle nach Fig. 8 ist der jeweilige Lagerzapfen 13 als separates Element ausgebildet, bei welchem das äussere Gleitlager 14 des Lagerzapfens im Rollenkern 10 angeordnet ist und gegenüberliegend ragt der Lagerzapfen 13 in den Lagerbock 3. Dabei ist der Kanal 17' im Zentrum des Rollenkerns derart dimensioniert, dass er das äussere Gleitlager 14 stirnseitig umgibt, so dass das Kühlmittel zwischen Gleitlager 14 und dem Rollenkern 10 einfliessen kann. Dem Lagerzapfen 13 ist noch ein Flansch 13' zugeordnet, mittels dem er in Achsrichtung positioniert ist.

Im Prinzip könnte der Lagerzapfen 13 bei der Variante nach Fig. 8 als Bestandteil des Lagerbocks 3 und nicht als separates Element gefertigt sein.

Bei dieser Ausführungsform ist eine sehr effiziente Kühlung der Randbereiche der Führungsrolle 1 vorgesehen. Dies wird dabei durch schräg verlaufende Zufuhrkanäle 17' im Rollenkern 11 gewährleistet, über welche der helixförmige Kühlmittelkanal 12 mit dem Zufuhrkanal 15 bzw. dem Abfuhrkanal 16 in Verbindung steht.

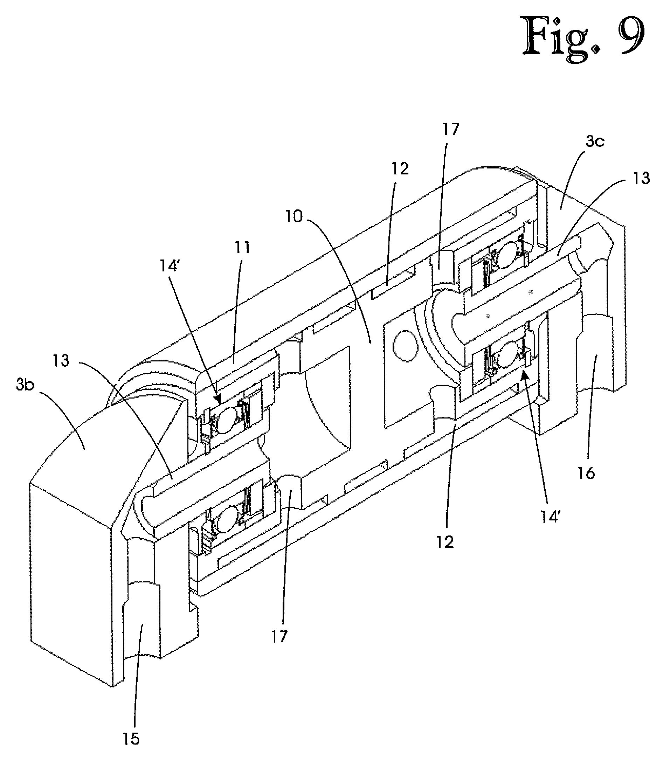

In Fig. 9 ist eine Variante einer erfindungsgemässen Führungsrolle gezeigt, wobei bei diesen anstatt des Gleitlagers 14 ein Wälzlager 14' zur Lagerung der Führungsrolle 11 in dem Lagerbock 3 verwendet wird.

Im Rahmen der Erfindung könnten die Lagerböcke auch modulartig an mehreren getrennt voneinander angeordneten Rahmenteilen befestigt sein.

Ferner könnte der Lagerzapfen 13 und das Gleitlager 14 einteilig hergestellt sein, wobei der Lagerzapfen im Bereich der Lagerung mit einem gut leitenden Material beschichtet sein könnte. Auch könnte beim Gleitlager eine andere Versorgung durch eine oder mehrere Durchgangsbohrungen in dem Lagerzapfen vorgesehen sein, durch welche das Kühlmittel zum Gleitlager geführt wird, um eine Schmierung, Kühlung und/oder Spülung bei demselben zu bewirken.

Es könnte auch eine starre oder eine mit sehr hoher Steifigkeit vorgesehene Rollenlagerung insbesondere auf der Festseite (aussen) und eine elastische Lagerung der Rollenlagerung bei den andern drei Längsseiten des Stranges vorgesehen sein. In Giessrichtung könnte die Steifigkeit der Federn von einer Rollenebene zur nächsten variierend ausgestaltet sein, dies vorzugsweise in Abhängigkeit der Schalensteifigkeit des Strangs.

## Patentansprüche

1. Führungsrolle für die Strangführung einer Stranggießanlage, die drehbar in einem Lagerbock (3) lagerbar und mit einer Kühlmittelversorgungsleitung verbindbar ist und einen Rollenkern (10) sowie einen um den Rollenkern (10) angeordneten Rollenmantel (11) umfasst, **dadurch gekennzeichnet, dass**
die Führungsrolle beidseitig je einen mit einem Gleitlager (14) versehenen Lagerzapfen (13) umfasst, welcher jeweils als Hohlzapfen ausgebildet und mit der Kühlmittelversorgungsleitung verbindbar ist, um ein Kühlmittel durch den Hohlzapfen in den Kühlmittelkanal (12) zu leiten oder aus diesem abzuführen.

2. Führungsrolle nach Anspruch 1, **dadurch gekennzeichnet, dass** der Rollenkern (10) einen helixförmigen Kühlmittelkanal (12) aufweist, welcher mit der Kühlmittelversorgungsleitung zur Durchleitung eines Kühlmittels durch die Führungsrolle verbindbar ist.

3. Führungsrolle nach Anspruch 2, **dadurch gekennzeichnet, dass** die als Hohlzapfen ausgebildeten Lagerzapfen (13) jeweils über einen radialen Verbindungskanal (17) mit dem helixförmigen Kühlmittelkanal (12) in Verbindung stehen.

4. Führungsrolle nach einem der vorhergehenden Ansprüche 1 bis 3, **dadurch gekennzeichnet, dass** der Kanal (15) im Lagerbock (3) bzw. der Kanal (17') im Zentrum des Rollenkerns (10) derart dimensioniert ist, dass er das äussere Gleitlager (14) stirnseitig umgibt, so dass das Kühlmittel zwischen Gleitlager (14) und dem Lagerbock (3) bzw. dem Rollenkern (10) einfliessen kann, um eine Schmierung, Kühlung und/oder Spülung beim Gleitlager (14) zu bewirken.

5. Führungsrolle nach einem der vorhergehenden Ansprüche 1 bis 4, **dadurch gekennzeichnet, dass** der Lagerzapfen (13) als Bestandteil des Rollenkerns (10) oder des Lagerbocks (3) gefertigt ist.

6. Führungsrolle nach einem der vorhergehenden Ansprüche 1 bis 5, **dadurch gekennzeichnet, dass** der Lagerzapfen (13) und das Gleitlager (14) einteilig hergestellt sind.

7. Führungsrolle nach einem der vorhergehenden Ansprüche 1 bis 6, **dadurch gekennzeichnet, dass** das Gleitlager (14) als Wälzlager (14') zur Lagerung der Führungsrolle im Lagerbock vorgesehen ist.

8. Rollenanordnung für eine Stranggießanlage mit einer Mehrzahl von als Stützrollen vorgesehene Führungsrollen (1), welche längs eines von der Stranggießanlage erzeugten Strangs (2) in einem Achsabstand zueinander angeordnet und jeweils drehbar in einem Lagerbock (3) gelagert sind, wobei die Lagerböcke (3) jeweils vorgespannt an wenigstens einem Rahmenteil (4, 5) angeordnet und mittels elastisch nachgiebigen Verbindungsmitteln (6) selbsteinstellend an den Rahmenteilen (4, 5) gelagert sind, **dadurch gekennzeichnet, dass** die Verbindungsmittel (6) durch Bügel aus federndem Material gebildet sind, welche einerseits am Rahmenteil (4, 5) und andererseits am Lagerbock (3) mit jeweils einer Führungsrolle (1) befestigt sind.

9. Rollenanordnung nach Anspruch 8, **dadurch gekennzeichnet, dass** die Rahmenteile (4, 5), an denen die Lagerböcke (3) elastisch befestigt sind, starr mit dem für die Kokille (9) vorgesehenen Oszillationstisch oder mit der starren Struktur der Stranggiessmaschine verbindbar sind.

10. Rollenanordnung nach Anspruch 8 oder 9, **dadurch gekennzeichnet, dass** die Lagerböcke (3) mittels elastisch nachgiebigen Verbindungsmitteln (6) selbsteinstellend an den Rahmenteilen (4, 5) gelagert sind.

11. Rollenanordnung nach Anspruch 8, **dadurch gekennzeichnet, dass** es sich bei den elastisch nachgiebigen Verbindungsmitteln (6) um Druckfedern handelt.

12. Rollenanordnung nach Anspruch 8, **dadurch gekennzeichnet, dass** die elastisch nachgiebigen Verbindungsmittel (6) eine lineare Federkennlinie aufweisen.

13. Rollenanordnung nach Anspruch 8, **dadurch gekennzeichnet, dass** die Anpresskraft, mit der die Führungsrollen (1) an die Oberfläche des Strangs (2) andrückbar sind, durch Auswahl, Anpassung oder Einstellung der elastisch nachgiebigen Verbindungsmittel (6) einstellbar ist.

14. Rollenanordnung nach Anspruch 8, **dadurch gekennzeichnet, dass** die Anpresskraft, mit der die Führungsrollen (1) an die Oberfläche des Strangs (2) andrückbar sind, in Abhängigkeit der Strangbreite, je nach Position der Rollen, des Giessformates und/oder der Giessprozessparametern zwischen 100 N und 2200 N liegt.

## Claims

1. Guide roller for guiding a strand of a continuous casting plant, that can be mounted rotatably in a bearing mount (3) and can be connected to a coolant supply line and comprises a roller core (10) and a roller jacket (11) disposed around the roller core (10), **characterised in that**
the guide roller comprises on both sides a respective bearing journal (13) provided with a slide bearing (14), which is respectively in the form of a hollow journal and can be connected to the coolant supply line in order to conduct a coolant through the hollow journal into the coolant channel (12) or to discharge it from the latter.

2. Guide roller according to Claim 1, **characterised in that** the roller core (10) has a substantially helical coolant channel (12), which can be connected to the coolant supply line in order to convey a coolant through the guide roller.

3. Guide roller according to Claim 2, **characterised in that** the bearing journals (13) made as hollow journals are respectively connected to the helical coolant channel (12) by means of a radial connecting channel (17).

4. Guide roller according to any one of the preceding Claims 1 to 3, **characterised in that** the channel (15) in the bearing mount (3) respectively the channel (17') in the centre of the roller core (10) have dimensions such that it surrounds the outer slide bearing (14) on the face side so that the coolant can flow in between the slide bearing (14) and the bearing mount (3) respectively the roller core (10) in order to bring about lubrication, cooling and/or flushing with the slide bearing (14).

5. Guide roller according to any of the preceding Claims 1 to 4, **characterised in that** the bearing journal (13) is produced as a component part of the roller core (10) or of the bearing mount (3).

6. Guide roller according to any of the preceding Claims 1 to 5, **characterised in that** the bearing journal (13) and the slide bearing (14) are produced as one part.

7. Guide roller according to any of the preceding Claims 1 to 6, **characterised in that** the slide bearing (14) is provided as rolling contact bearing (14') for the bearing of the guide roller in the bearing mount.

8. Roller assembly for a continuous casting plant having a plurality of guide rollers (1) provided as support rollers, which are arranged an axial distance apart from one another along a strand (2) produced by the continuous casting plant and are respectively mounted rotatably in a bearing mount (3), wherein the bearing mounts (3) respectively being arranged, preloaded, on at least one frame part (4, 5), and are mounted so as to be self-setting on the frame parts (4, 5) by means of elastically pliable connecting means (6), **characterised in that** the connecting means (6) being formed by brackets from resilient material, which are fastened on one hand to the frame part (4, 5) and on the other hand at the bearing mount (3) with a respective guide roller (1).

9. Roller assembly according to Claim 8, **characterised in that** the frame parts (4, 5) to which the bearing mounts (3) are elastically fastened can be connected rigidly to the oscillation table provided for the mould (6) or to the rigid structure of the strand casting machine.

10. Roller assembly according to Claim 8 or 9, **characterised in that** the bearing mounts (3) are mounted on the frame parts (4, 5) so as to be self-setting by means of elastically pliable connecting means (6).

11. Roller assembly according to Claim 8, **characterised in that** the elastically pliable connecting means (6) are pressure springs.

12. Roller assembly according to Claim 8, **characterised in that** the elastically pliable connecting means (6) have a linear spring characteristic curve.

13. Roller assembly according to Claim 8, **characterised in that** the pressing force by means of which the guide rollers (1) are pressed onto the surface of the strand (2) can be set by selection, adaptation or adjustment of the elastically pliable connecting means (6).

14. Roller assembly according to Claim 8, **characterised in that** the pressing force by means of which the guide rollers (1) are pressed onto the surface of the strand (2) is between 100 N and 2200 N according to the strand width depending on the position of the rollers, the casting format and/or the casting process parameters.

## Revendications

1. Rouleau de guidage de la barre d'une installation de coulée continue, qui peut être monté tournant dans un support (3) de palier et qui peut communiquer avec un conduit d'alimentation en fluide de refroidissement et qui comprend une âme (10) de rouleau ainsi qu'une enveloppe (11) de rouleau disposée autour de l'âme (10) du rouleau, **caractérisé en ce que**
le rouleau de guidage comprend des deux côtés respectivement un tourillon (13) de palier, qui est pourvu d'un palier (14) lisse, qui est constitué respectivement en tourillon creux et qui peut être relié au conduit d'alimentation en fluide de refroidissement pour conduire un fluide de refroidissement par le tourillon creux dans le conduit (12) pour du fluide de refroidissement ou pour l'en y faire sortir.

2. Rouleau de guidage suivant la revendication 1, **caractérisé en ce que** l'âme (10) du rouleau a un conduit (12) hélicoïdal pour du fluide de refroidissement, qui peut communiquer avec le conduit d'alimentation en fluide de refroidissement pour faire passer un fluide de refroidissement dans le rouleau de guidage.

3. Rouleau de guidage suivant la revendication 2, **caractérisé en ce que** le tourillon (13) de palier, constitué en tourillon creux, communique respectivement avec le conduit (12) hélicoïdal pour du fluide de refroidissement par l'intermédiaire d'un conduit (17) radial de liaison.

4. Rouleau de guidage suivant l'une des revendications précédentes 1 à 3, **caractérisé en ce que** le conduit (15) dans le support (3) du palier ou le conduit (17') au centre de l'âme (10) du rouleau a des dimensions telles qu'il entoure du côté frontal le palier (14) lisse extérieur de manière à ce que le fluide de refroidissement puisse s'écouler entre le palier (14) lisse et le support (3) de palier ou l'âme (10) du rouleau, afin de provoquer une lubrification, un refroidissement et/ou un lavage du palier (14) lisse.

5. Rouleau de guidage suivant l'une des revendications précédentes 1 à 4, **caractérisé en ce que** le tourillon (13) du palier fait partie de l'âme (10) du rouleau ou du support (3) du palier.

6. Rouleau de guidage suivant l'une des revendications précédentes 1 à 5, **caractérisé en ce que** le tourillon (13) du palier et le palier (14) lisse sont fabriqués en une seule pièce.

7. Rouleau de guidage suivant l'une des revendications précédentes 1 à 6, **caractérisé en ce que** le palier (14) lisse est sous la forme d'un palier (14') à roulement pour le montage du rouleau de guidage dans le support du palier.

8. Agencement de rouleaux pour une installation de coulée continue, ayant une pluralité de rouleaux (1) de guidage prévus comme rouleaux d'appui, qui sont disposés à distance axiale les uns des autres le long d'une barre (2) produite par l'installation de coulée continue et qui sont montés respectivement tournants dans un support (3) de palier, les supports (3) de palier étant montés précontraints sur au moins une partie (4, 5) de bâti et étant montés à autoréglage sur les parties (4, 5) de bâti à l'aide de moyens (6) de liaison cédant élastiquement, **caractérisé en ce que** les moyens (6) de liaison sont formés par des étriers en matériau élastique, qui sont fixés d'une part aux parties (4, 5) du bâti et d'autre part au support (3) du palier par respectivement un rouleau (1) de guidage.

9. Agencement de rouleaux suivant la revendication 8, **caractérisé en ce que** les parties (4, 5) de bâti, auxquelles les supports (3) de palier sont fixés élastiquement, peuvent être reliés rigidement à la table d'oscillation prévue pour la lingotière (9) ou à la structure rigide de la machine de coulée continue.

10. Agencement de rouleaux suivant la revendication 8 ou 9, **caractérisé en ce que** les supports (3) de palier sont montés à autoréglage sur les parties (4,5) de bâti à l'aide de moyens (6) de liaison cédant élastiquement.

11. Agencement de rouleaux suivant la revendication 8, **caractérisé en ce que** les moyens (6) de liaison cédant élastiquement sont des ressorts de compression.

12. Agencement de rouleaux suivant la revendication 8, **caractérisé en ce que** les moyens (6) de liaison cédant élastiquement ont une caractéristique de ressort linéaire.

13. Agencement de rouleaux suivant la revendication 8, **caractérisé en ce que** la force de l'application d'une pression, par laquelle les rouleaux (1) de guidage peuvent être appliqués à la surface de la barre (2), est réglable par choix, adaptation ou réglage des moyens (6) de liaison cédant élastiquement.

14. Agencement de rouleaux suivant la revendication 8, **caractérisé en ce que** la force d'application d'une pression, par laquelle les rouleaux (1) de guidage peuvent être appliqués à la surface de la barre (2), est comprise, en fonction de la largeur de la barre, entre 100 N et 2200 N suivant la position des rouleaux, le format de coulée et/ou les paramètres du processus de coulée.
